(19) Europäisches Patentamt
European Patent Office
Office européen des brevets

(11) EP 4 563 654 A1

(12) EUROPEAN PATENT APPLICATION
published in accordance with Art. 153(4) EPC

(43) Date of publication:
04.06.2025 Bulletin 2025/23

(21) Application number: 23846393.9

(22) Date of filing: 21.07.2023

(51) International Patent Classification (IPC):
C08L 67/02 (2006.01)    C08K 3/04 (2006.01)
C08K 5/49 (2006.01)     C08L 23/08 (2025.01)
C08L 51/04 (2006.01)    C08L 69/00 (2006.01)
C08L 101/02 (2006.01)

(52) Cooperative Patent Classification (CPC):
C08K 3/04; C08K 5/49; C08L 23/08; C08L 51/04;
C08L 67/02; C08L 69/00; C08L 101/02

(86) International application number:
PCT/JP2023/026744

(87) International publication number:
WO 2024/024662 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.07.2022 JP 2022118115

(71) Applicants:
• Mitsubishi Chemical Corporation
Tokyo 100-8251 (JP)

• NISSAN MOTOR CO., LTD.
Kanagawa 221-0023 (JP)

(72) Inventors:
• MUTO, Fumihiro
Tokyo 100-8251 (JP)
• JOUDUKA, Takao
Yokohama-shi, Kanagawa 221-0023 (JP)
• TOKUMO, Kazuaki
Yokohama-shi, Kanagawa 221-0023 (JP)

(74) Representative: Hoffmann Eitle
Patent- und Rechtsanwälte PartmbB
Arabellastraße 30
81925 München (DE)

(54) **RESIN COMPOSITION AND MOLDED OBJECT**

(57)     To provide a resin composition and a molded body. A resin composition comprising:
2 to 15 parts by mass of an elastomer, 3 to 20 parts by mass of a hydroxy group-containing compound, and 3 to 20 parts by mass of conductive carbon, relative to 100 parts by mass of resin components including polybutylene terephthalate resin, wherein the hydroxy group-containing compound has a concentration of hydroxy group as proportion of the peak area derived from hydroxy group relative to the whole peak area in $^1$H NMR analysis [(Peak area derived from hydroxy group/Whole peak area) $\times$ 100] in the range of 0.5 to 15.0%.

EP 4 563 654 A1

**Description**

[Technical Field]

The present invention relates to a resin composition and a molded body. In particular, the present invention relates to a conductive resin composition suitable for electrostatic coating of a water-based coating material.

[Background Art]

Polybutylene terephthalate resins are easy processable, and excellent in mechanical/physical properties, electrical properties and heat resistance properties and other physical and chemical properties. Accordingly, polybutylene terephthalate resins are widely used for automobile parts, electrical/electronic equipment parts, precision equipment parts and the like.

Although currently steel plates are mainly used for a fuel oil tank lid part of automobiles, fuel oil tank lid parts made of resin have recently attracted attention due to high degree of freedom in shapes. For coating of the parts, on-line electrostatic coating is exclusively used to reduce process costs.

As the material for electrostatic coating, resin compositions having conductivity has been proposed. For example, in Patent Literature 1, a conductive polyester resin composition containing conductive carbon black, an ethylene copolymer-based impact improver and ultra-branched polyester is disclosed.

Further, in recent years, requirements for forming processability to correspond to forming of parts with a complicated shape have been enhanced. In order to improve forming processability, improvement in fluidity during melting is required for resin materials. For example, in Patent Literature 2, a polybutylene terephthalate resin composition containing a thermoplastic elastomer and an acrylic-based oligomer is disclosed.

[Citation List]

[Patent Literature]

> [Patent Literature 1]
> International Publication No. WO 2019/037122
> [Patent Literature 2]
> International Publication No. WO 2008/075776

[Summary of the Invention]

[Object of the Invention]

In some cases, coating is applied to a molded body formed of composition containing a polybutylene terephthalate resin and conductive carbon from the viewpoint of imparting designability, anti-rust properties or weather resistance.

However, through study by the present inventors, it has been found that in the case where a water-based coating material is applied to a molded body formed from composition containing a polybutylene terephthalate resin and conductive carbon, a problem of easy peeling-off of the water-based coating material is caused due to low adhesion between the molded body and the water-based coating material.

An object of the present invention is to solve the problem, that is, to provide a resin composition containing a polybutylene terephthalate resin and conductive carbon from which a molded body can be formed, wherein in the case where a water-based coating material is applied thereto, peeling-off of the water-based coating material is hardly caused due to high adhesion with the water-based coating material, and to provide the molded body.

[Solution to Problem]

The present inventors conducted diligent research to address the above-mentioned problems, and as a result, discovered that the problems described above could be solved by blending elastomer, hydroxy group-containing compound, and conductive carbon into resin components including polybutylene terephthalate resin in a predetermined proportion.

Specifically, the problems described above are solved by the following means.

<1> A resin composition comprising:

2 to 15 parts by mass of an elastomer, 3 to 20 parts by mass of a hydroxy group-containing compound, and 3 to 20 parts by mass of conductive carbon, relative to 100 parts by mass of resin components including polybutylene terephthalate resin,
wherein the hydroxy group-containing compound has a concentration of hydroxy group as proportion of the peak area derived from hydroxy group relative to the whole peak area in $^1$H NMR analysis [(Peak area derived from hydroxy group/Whole peak area) × 100] in the range of 0.5 to 15.0%.

<2> The resin composition according to <1>, wherein the resin components further comprise a polycarbonate resin.
<3> The resin composition according to <2>, further comprising 0.05 to 2 parts by mass of a phosphorus-based stabilizer relative to 100 parts by mass of the resin components.
<4> The resin composition according to any one of <1> to <3>, wherein the polybutylene terephthalate resin has an limiting viscosity of 1.00 to 1.50 dL/g.
<5> The resin composition according to any one of <1> to <4>, wherein the elastomer comprises an epoxy group-containing compound.
<6> The resin composition according to any one of <1> to <5>, wherein the hydroxy group-containing compound has a weight average molecular weight of 1,500 to 30,000.
<7> The resin composition according to any one of <1> to <6>, wherein the hydroxy group-containing compound comprises a (meth)acrylic compound.
<8> The resin composition according to any one of <1> to <7>, wherein the hydroxy group-containing compound is an amorphous compound.
<9> The resin composition according to any one of <1> to <8>, wherein the concentration of hydroxy group of the hydroxy group-containing compound is in the range of 0.5 to 10.0%.
<10> The resin composition according to any one of <1> to <9>, being used for forming a molded body to be electrostatically coated with a water-based coating material.
<11> A molded body formed from the resin composition according to any one of <1> to <10>.
<12> The molded body according to <11>, being a fuel oil tank lid.

[Advantageous Effects of Invention]

According to the present invention, a resin composition containing a polybutylene terephthalate resin and conductive carbon from which a molded body can be formed, wherein in the case where a water-based coating material is applied thereto, peeling-off of the water-based coating material is hardly caused due to high adhesion with the water-based coating material, and the molded body can be provided.

[Description of Embodiments]

A mode for carrying out the present invention (hereinafter, simply referred to as "this embodiment") will now be described in detail. It is noted that this embodiment is an illustrative example for describing the present invention, and the present invention is not limited to only this embodiment.
In addition, in this specification, the meaning of "from ... to" includes the numerical values described before and after "..." as a lower limit value and an upper limit value.
In this specification, various physical property values and characteristic values are assumed to be values as of 23°C, unless otherwise stated.
In this specification, regarding description of groups (atomic groups), groups (atomic groups) without description of substitution or unsubstitution include groups (atomic groups) having no substituent and groups (atomic groups) having a substituent. For example, the term "alkyl group" includes not only an alkyl group having no substituent (unsubstituted alkyl group) but also an alkyl group having a substituent (substituted alkyl group). In this specification, groups without description of substitution or unsubstitution are preferably unsubstituted groups.
In this specification, the term "(meth)acrylate" represents both or either one of acrylate and methacrylate, and the term "(meth)acrylic" represents both or either one of acrylic and methacrylic.
In this specification, the weight average molecular weight is in terms of polystyrene measured by GPC (gel permeation chromatography).
In this specification, the term "step" includes not only an independent step but also a step in which an intended effect is achieved even in the case where the step is not distinguished from other steps.
In this specification, ppm means ppm by mass.
If the measurement methods and the like described in the standards shown in this specification differ from year to year, unless otherwise stated, those measurement standards shall be based on the standards as of January 1, 2021.

The resin composition in this embodiment contains 2 to 15 parts by mass of an elastomer, 3 to 20 parts by mass of a hydroxy group-containing compound, and 3 to 20 parts by mass of conductive carbon, relative to 100 parts by mass of resin components including a polybutylene terephthalate resin. The hydroxy group-containing compound has a concentration of hydroxy group as proportion of the peak area derived from hydroxy group relative to the whole peak area in $^1$H NMR analysis [(Peak area derived from hydroxy group/Whole peak area) $\times$ 100] in the range of 0.5 to 15.0%. With such a constitution, a resin composition containing a polybutylene terephthalate resin and conductive carbon from which a molded body can be obtained, and in the case a water-based coating material is applied thereto, peeling-off of the water-based coating material is hardly caused due to high adhesion with the water-based coating material.

The reason is presumed that the polybutylene terephthalate resin and the hydroxy group-containing compound are moderately compatibilized to precipitate the hydroxy group-containing compound on the resulting molded body surface without separation from the polybutylene terephthalate resin, so that the hydroxy groups of the hydroxy group-containing compound interact with the water-based coating material to drastically improve the coating adhesion.

<<Polybutylene terephthalate resin>>

Polybutylene terephthalate resins are produced through a reaction between terephthalic acid and 1,4-butane diol on a large scale. In this embodiment, these resins available from the market may be used. Although some polybutylene terephthalate resins contain a copolymerization component other than a terephthalic acid component and a 1,4-butane diol component, ones with a copolymerization component content of preferably 3 to 40 mass%, more preferably 5 to 30 mass%, still more preferably 10 to 25 mass%, may be used in this embodiment.

The limiting viscosity (IV) of the polybutylene terephthalate resin is preferably 1.00 dL/g or more, more preferably 1.10 dL/g or more, still more preferably 1.18 dL/g or more, and further preferably 1.20 dL/g or more. Further, the limiting viscosity is preferably 1.50 dL/g or less, more preferably 1.40 dL/g or less, still more preferably 1.35 dL/g or less, further preferably 1.30 dL/g or less, still further preferably 1.28 dL/g or less, furthermore preferably 1.27 dL/g or less, and particularly furthermore preferably 1.26 dL/g or less. By setting the limiting viscosity to be equal to or more than the lower limit value, excellent toughness can be exhibited. Further, by setting the limiting viscosity to be equal to or less than the upper limit value, moldability tends to be improved without losing the fluidity of the resin composition.

Here, the limiting viscosity of the polybutylene terephthalate resin is a measured value in a mixed solvent of phenol/tetrachloroethane (mass ratio: 1/1) at 30°C.

The terminal carboxyl group content of the polybutylene terephthalate resin is usually 60 eq/ton or less, preferably 50 eq/ton or less, and more preferably 30 eq/ton or less. By setting the content to be equal to or less than 60 eq/ton, alkali resistance and hydrolysis resistance tend to improve, and gas is hardly generated during melt-molding of resin composition. Although the lower limit of the terminal carboxyl group content is not particularly limited, the lower limit is usually 10 eq/ton in consideration of the productivity of producing the polybutylene terephthalate resin.

The terminal carboxyl group content of the polybutylene terephthalate resin may be determined by dissolving 0.5 g of the resin in 25 mL of benzyl alcohol, and titrating the resultant solution using a 0.01 mol/L solution of sodium hydroxide in benzyl alcohol.

The polybutylene terephthalate resin may be a polybutylene terephthalate resin modified by copolymerization, and specific examples of the preferred copolymers include a polyester ether resin copolymerized with a polyalkylene glycol, in particular polytetramethylene glycol, a dimer acid copolymerized polybutylene terephthalate resin, and an isophthalic acid copolymerized polybutylene terephthalate resin. In addition, these copolymers refer to ones having an amount of copolymerization of 1 mol% or more and less than 50 mol% of the total segments of the polybutylene terephthalate resin. In particular, the amount of copolymerization is preferably 2 to 50 mol%, more preferably from 3 to 40 mol%, and particularly preferably from 5 to 20 mol%. The details thereof may be referred to paragraphs 0014 to 0022 in Japanese Patent Laid-Open No. 2019-006866, and the content of which is incorporated herein by reference.

The catalyst used in carrying out the esterification reaction may be a conventionally known catalyst, and examples thereof include titanium compounds, tin compounds, magnesium compounds, calcium compounds, and the like. Particularly preferred among these are titanium compounds. Specific examples of the titanium compound as the esterification catalyst include titanium alcoholates such as tetramethyl titanate, tetraisopropyl titanate, and tetrabutyl titanate, and titanium phenolates such as tetraphenyl titanate.

The content of the polybutylene terephthalate resin in the resin composition of this embodiment is preferably 30 parts by mass or more, more preferably 40 parts by mass or more, still more preferably 45 parts by mass or more, and further preferably 50 parts by mass or more, in 100 parts by mass of resin components containing polybutylene terephthalate resin. By setting the content to be equal to or more than the above lower limit value, chemical resistance tends to be further improved. Further, the content of the polybutylene terephthalate resin is preferably 99 parts by mass or less, more preferably 90 parts by mass or less, still more preferably 80 parts by mass or less, further preferably 70 parts by mass or less, and furthermore preferably 60 parts by mass or less. By setting the content to be equal to or less than the above upper limit value, a smaller warpage amount of the molded body tends to be more effectively achieved.

The resin composition of this embodiment may contain only one type of polybutylene terephthalate resin, or may contain two or more types of polybutylene terephthalate resin. When two or more types are included, it is preferable that the total amount falls within the above-described range.

<<Polycarbonate resin>>

The resin composition of this embodiment may include a polycarbonate resin in addition to a polybutylene terephthalate resin. By containing a polycarbonate resin, the resulting molded body can have more effectively improved impact resistance. Further, although peeling-off tends to be caused in the case where a molded body containing both of a polybutylene terephthalate resin and a polycarbonate resin as resin components is applied with a water-based coating material, the peeling-off of the water-based coating material can be effectively suppressed in this embodiment by containing the hydroxy group-containing compound.

The polycarbonate resin is obtained by reacting a dihydroxy compound or a dihydroxy compound and a small amount of a polyhydroxy compound with phosgene or a carbonic acid diester, and may be an optionally-branched homopolymer or copolymer. The method for producing the polycarbonate resin is not particularly limited, and a polycarbonate resin produced by a conventionally-known phosgene method (interfacial polymerization method) or melting method (ester exchange method) can be used.

As the raw material dihydroxy compound, aromatic dihydroxy compounds are preferred, and examples thereof include 2,2-bis(4-hydroxyphenyl)propane (= bisphenol A), tetramethylbisphenol A, bis(4-hydroxyphenyl)-p-diisopropylbenzene, hydroquinone, resorcinol and 4,4-dihydroxydiphenyl. Bisphenol A is more preferred. Further, it is also possible to use a compound in which one or more tetraalkylphosphonium sulfonates are bonded to the above-described aromatic dihydroxy compound.

Among the polycarbonate resins mentioned above, an aromatic polycarbonate resin derived from 2,2-bis(4-hydroxyphenyl)propane, or an aromatic polycarbonate copolymer derived from 2,2-bis(4-hydroxyphenyl)propane and another aromatic dihydroxy compound is preferable. Further, a copolymer mainly composed of an aromatic polycarbonate resin, such as a copolymer of a polymer or oligomer having a siloxane structure, may be used. In addition, two or more of the above-described polycarbonate resins may be used in combination.

A monovalent aromatic hydroxy compound may be used to adjust the molecular weight of the polycarbonate resin, and examples thereof include m- and p-methylphenol, m- and p-propylphenol, p-tert-butylphenol, p-long-chain-alkyl-substituted phenol, and the like.

The viscosity average molecular weight (Mv) of the polycarbonate resin is preferably 10,000 or more, more preferably 15,000 or more, and further preferably 20,000 or more. By using a polycarbonate resin having a viscosity average molecular weight of 10,000 or more, the mechanical strength of the obtained resin composition tends to be further improved. Further, the viscosity average molecular weight (Mv) of the polycarbonate resin is preferably 60,000 or less, more preferably 40,000 or less, and further preferably 30,000 or less. By using a polycarbonate resin having a viscosity average molecular weight of 60,000 or less, the fluidity of the resin composition tends to be improved and the moldability tends to be improved.

In this embodiment, the viscosity average molecular weight (Mv) of the polycarbonate resin indicates a value calculated from the following Schnell's viscosity formula by measuring the viscosity of a solution of the polycarbonate resin in methylene chloride at 20°C using an Ubbelohde viscometer to determine the limiting viscosity ($[\eta]$).

$$[\eta] = 1.23 \times 10^{-4} Mv^{0.83}$$

The method for producing the polycarbonate resin is not particularly limited, and a polycarbonate resin produced by either a phosgene method (interfacial polymerization method) or melting method (ester exchange method) can be used. In addition, a polycarbonate resin produced by subjecting a polycarbonate resin produced by a melting method to a post-treatment to adjust the amount of terminal OH groups is also preferable.

The content of the polycarbonate resin in 100 parts by mass of resin components including a polybutylene terephthalate resin is preferably 1 part by mass or more, more preferably 10 parts by mass or more, further preferably 20 parts by mass or more, still further preferably 30 parts by mass or more, and still further preferably 40 parts by mass or more. Further, the content of the polycarbonate resin in 100 parts by mass of the resin components including the polybutylene terephthalate resin is preferably 70 parts by mass or less, more preferably 60 parts by mass or less, further preferably 55 parts by mass or less, and still further preferably 50 parts by mass or less. By setting the content in such a range, the molded body using the resin composition has improved impact resistance and reduced warpage.

The resin composition of this embodiment may contain only one type of the polycarbonate resin, or may contain two or more types of the polycarbonate resin. When two or more types are included, the total amount is preferably within the ranges described above.

The mass ratio between the polybutylene terephthalate resin and the polycarbonate resin is preferably 50 to 90/50 to 10, more preferably 50 to 70/50 to 30, and still more preferably 50 to 60/50 to 40.

The resin composition of this embodiment may or may not contain a resin component other than the polybutylene terephthalate resin and the polycarbonate resin.

In the case where the resin composition of this embodiment contains another resin component, examples thereof include a styrene-based resin, a polyethylene terephthalate resin, a polyarylate resin, a modified polyphenylene ether resin and a polyamide resin. Among components as elastomers and other additives described below, polymer components are not included in the resin components in this embodiment.

In the resin composition of this embodiment, the total amount of the polybutylene terephthalate resin and the polycarbonate resin preferably accounts for 90 mass% or more of the resin components, more preferably 95 mass% or more, still more preferably 98 mass% or more, and further preferably 99 mass% or more.

Also, the total content of the resin components in the resin composition is preferably 72 mass% or more of the resin composition, more preferably 75 mass% or more. The total content of the resin components in the resin composition is preferably 92 mass% or less of the resin composition, more preferably 90 mass% or less, still more preferably 85 mass% or less, and further preferably 84 mass% or less.

By setting the content in the above-described range, a molded body excellent in balance among the chemical resistance, impact resistance and dimension stability can be obtained.

<<Elastomer>>

In this embodiment, in order to improve the impact resistance of the molded body, an elastomer is blended aside from the resin components including the polybutylene terephthalate resin.

Examples thereof include a thermoplastic elastomer usually used for improving the impact resistance of a molded body, and a rubbery polymer or a copolymerized product of the rubbery polymer and a compound reactive thereto may be used.

Among elastomers, an elastomer including an epoxy group (epoxy group-containing compound) is preferred. By containing the elastomer including an epoxy group, not only the impact resistance of the molded body can be enhanced, but also the adhesion to the water-based coating material can be effectively improved.

A first embodiment of the elastomer including an epoxy group relates to a copolymer obtained by copolymerizing an $\alpha$-olefin, a glycidyl ester of $\alpha,\beta$-unsaturated acid, and on an as needed basis, an unsaturated monomer copolymerizable with these. The content of the glycidyl ester of $\alpha,\beta$-unsaturated acid is preferably 1 mass% or more in the whole copolymerized components, more preferably 3 mass%, and still more preferably 5 mass% or more, from the viewpoint of adhesion to a water-based coating material. The upper limit is not particularly limited, and is preferably 20 mass% or less in the whole copolymerized components, more preferably 18 mass% or less, and still more preferably 16 mass% or less, from the view point of handling.

Examples of the $\alpha$-olefin include ethylene, propylene, butene-1, and pentene-1. These may be used in a combination of two or more types. Examples of the glycidyl ester of $\alpha,\beta$-unsaturated acid include glycidyl acrylate, glycidyl methacrylate, glycidyl ethacrylate, and glycidyl itaconate. These may be used in a combination of two or more types. Examples of the vinyl-based monomer copolymerizable with the components described above include vinyl ethers, vinyl esters such as vinyl acetate and vinyl propionate, methyl, ethyl, propyl or butyl acrylates or methacrylates, acrylonitrile and styrene. These may be used in a combination of two or more types.

Preferred examples of the elastomer including an epoxy group include an ethylene/glycidyl methacrylate copolymer, an ethylene/glycidyl methacrylate/vinyl acetate copolymer, an ethylene/glycidyl methacrylate/alkyl acrylate copolymer, and an ethylene/alkyl acrylate/vinyl acetate copolymer. In particular, an ethylene/glycidyl methacrylate/alkyl acrylate (preferably butyl acrylate) copolymer is preferred from the viewpoint of excellent toughness and further improving the wet heat resistance and impact resistance of the molded body. As specific examples of the elastomer including an epoxy group, products "LOTADER" (registered trademark) AX8900 and AX8700 manufactured by Arkema are available.

Alternatively, an elastomer other than the elastomer including an epoxy group may be appropriately added. Examples of the elastomer include a copolymer of ethylene and an unsaturated carboxylate (ethylene-methacrylate copolymer, ethylene-butyl acrylate copolymer, etc.), a copolymer of ethylene and an aliphatic vinyl compound, a terpolymer of ethylene, propylene and a nonconjugated diene, an acrylic rubber (polybutyl acrylate, poly(2-ethylhexyl acrylate), butyl acrylate-2-ethyl hexyl acrylate copolymer, etc.), polybutadiene, polyisoprene, a diene-based copolymer (styrene-butadiene copolymer, acrylonitrile-butadiene copolymer, acrylic-butadiene rubber, etc.), a copolymer of ethylene and an $\alpha$-olefin having 3 or more carbon atoms (ethylene-propylene copolymer, ethylene-butene copolymer, ethylene-octene copolymer, etc.), and a silicone-based rubber (polyorganosiloxane rubber, and IPN-type composite rubber consisting of polyorganosiloxane rubber and polyalkyl (meth)acrylate rubber).

Examples of the other elastomer include a core/shell-type elastomer. By using a core/shell-type elastomer, due to a reactive compound contained in the core layer, the adhesion to a thermoplastic resin such as polybutylene terephthalate resin is excellent, so that the weld strength tends to be enhanced. Examples of the core/shell-type elastomer include one having a core polymer to which a monomer component is graft-copolymerized.

The core is preferably a rubbery polymer and examples thereof include an acrylonitrile/acrylic-based rubbery polymer/styrene graft copolymer (ASA resin), a methylmethacrylate/acrylic-based rubbery polymer/styrene copolymer (MSA resin), a methylmethacrylate/acrylonitrile/acrylic-based rubbery polymer/styrene graft copolymer (MASA resin), and a polyorganosiloxane-containing rubbery polymer.

Specific examples of monomer components that can be graft-copolymerizable with a core include an aromatic vinyl compound, a vinyl cyanide compound, a (meth)acrylate compound, a (meth)acrylic acid compound, an epoxy group-containing (meth)acrylate such as glycidyl (meth)acrylate, a maleimide compound such as maleimide, N-methylmaleimide and N-phenylmaleimide; an $\alpha,\beta$-unsaturated carboxylic acid compound such as maleic acid, phthalic acid and itaconic acid and an anhydride thereof (for example, maleic anhydride).

Specific examples of the rubbery polymer, aromatic vinyl compound, vinyl cyanide compound and (meth)acrylate compound may be referred to paragraphs 0042 to 0046 in Japanese Patent Laid-Open No. 2019-059813, and the content of which is incorporated herein by reference.

The elastomer has a melt flow rate (MFR) measured at 190°C under a load of 2.16 kgf according to JIS K7210 of preferably 0.1 to 50 g/10 minutes, more preferably 0.5 to 30 g/10 minutes. By controlling MFR within the range, the impact resistance tends to be improved while effectively suppressing appearance defects.

The elastomer content in the resin composition of this embodiment relative to 100 parts by mass of the resin components including polybutylene terephthalate resin is 2 parts by mass or more, preferably 3 parts by mass or more, still more preferably 4 parts by mass or more, further preferably 5 parts by mass or more, and may be 6 parts by mass or more, or 7 parts by mass or more. Also, the elastomer content in the resin composition of this embodiment relative to 100 parts by mass of the resin components including polybutylene terephthalate resin is 15 parts by mass or less, preferably 14 parts by mass or less, still more preferably 13 parts by mass or less, further preferably 12 parts by mass or less, and may be 11 parts by mass or less, 10 parts by mass or less, 9 parts by mass or less, or 8 parts by mass or less. By controlling the elastomer content within the range, the toughness and impact resistance of the resulting molded body may be further improved without decrease in conductivity required for electrostatic coating.

The resin composition of this embodiment may contain only one type of elastomer or may contain two or more types. In the case where two or more types are contained, it is preferable that the total amount be in the range described above.

<<Hydroxy group-containing compound>>

The hydroxy group-containing compound used in this embodiment has a concentration of hydroxy group as proportion of the peak area derived from hydroxy group relative to the whole peak area in 1H NMR analysis [(Peak area derived from hydroxy group/Whole peak area) $\times$ 100] in the range of 0.5 to 15.0%. Such a hydroxy group-containing compound is used to improve the coating adhesion of a water-based coating material in this embodiment.

The hydroxy group-containing compound is not particularly specified as long as a predetermined concentration of hydroxy group is satisfied, and examples thereof include a known hydroxy group-containing oligomer or polymer, preferably a hydroxy group-containing polymer. These hydroxy group-containing oligomers and polymers have a content of polar groups other than hydroxy groups of preferably 10 mol% or less of the hydroxy groups. With such a constitution, the effect of the present invention tends to be further effectively exhibited.

Specific examples of the hydroxy group-containing compound include polyalkylene glycol, polyvinyl alcohol, a (meth)acrylic compound (preferably (meth)acrylic polymer), and a multiply-branched polyester resin. Among them, a (meth)acrylic compound is preferred and a (meth)acrylic polymer is particularly preferred, from the viewpoint of moderate compatibility to the polybutylene terephthalate resin.

The hydroxy group-containing compound used in this embodiment may be a crystalline compound or an amorphous compound, and an amorphous compound is preferred. In the case of a crystalline resin, hydroxy groups tend to be present between molecules due to the folded structure of a molecular chain in a crystalline part, so that the abundance ratio of hydroxy groups in the surface layer part is presumed to be lowered. In the case of an amorphous resin, due to the randomized molecular chain structure, the abundance ratio of hydroxy groups in the surface layer of a molded body increases, so that the coating adhesion tends to be effectively exhibited.

The amorphous compound means a compound that has no definite melting point in measurement by differential scanning calorimetry (DSC). In the case of using two or more types of hydroxy group-containing compounds, it is preferable that at least one of the hydroxy group-containing compounds contained in the resin composition be an amorphous compound. Also, in the case of using two or more types of hydroxy group-containing compounds, it is preferable that 80 mass% or more (more preferably, 90 mass% or more) of the hydroxy group-containing compounds contained in the resin composition be amorphous compounds.

The concentration of hydroxy group in the hydroxy group-containing compound is 0.5% or more, preferably 1.0% or more, and more preferably 1.2% or more. The upper limit of the concentration of hydroxy group is 15.0% or less, preferably 12.0% or less, more preferably 10.0% or less, still more preferably 9.0% or less, further preferably 7.0% or less, furthermore preferably 5.0% or less, and even furthermore preferably 3.0% or less. By setting the concentration of hydroxy group to be equal to or less than 0.5%, the adhesion of a water-based coating material is improved, and by setting the content to be equal to or less than 15.0%, more preferably equal to or less than 10.0%, the compatibility with a polybutylene terephthalate resin can be moderately maintained and retention in the resin hardly occurs. As a result, the adhesion and mechanical strength of the water-based coating material can be enhanced. Furthermore, by using the hydroxy group-containing compound within the range, the molded body surface has enhanced affinity with the water-based coating material, so that the adhesion of the water-based coating material can be enhanced at the time of coating.

In the case where the resin composition of this embodiment includes two or more types of hydroxy group-containing compounds, the concentration of hydroxy group is determined by calculating the concentration of hydroxy group in each of the compounds and averaging the concentration of hydroxy groups based on the mass ratio.

The concentration of hydroxy group in a hydroxy group-containing compound is determined from the following formula that represents the proportion of the peak area derived from hydroxy group relative to the whole peak area in $^1$H NMR analysis of the compound dissolved in a solvent.

Concentration of hydroxy group (%) = [(Peak area derived from hydroxy group (Integrated value of proton of hydroxy group)/Whole peak area (Integrated value of whole protons)) × 100]

The solvent for use is preferably a good solvent in which the compound is sufficiently dissolved, and examples thereof for use include dimethylsulfoxide-d6, deuterated chloroform, deuterated tetrachloroethane, and deuterated methanol.

In the case of using a plurality of hydroxy group-containing compounds, the concentration of hydroxy group is represented by the sum total of products of a ratio of each amount of hydroxy group-containing compound to total amount of hydroxy group-containing compounds and each concentration of hydroxy group-containing compound.

Example: In the case of using hydroxy group-containing compound A and hydroxy group-containing compound B

Concentration of hydroxy group (%) = Concentration of hydroxy group of hydroxy group-containing compound A (%)/(Parts by mass of hydroxy group-containing compound A/Parts by mass of whole hydroxy group-containing compounds) + Concentration of hydroxy group of hydroxy group-containing compound B (%)/(Parts by mass of hydroxy group-containing compound B/Parts by mass of whole hydroxy group-containing compounds)

The acid value of the hydroxy group-containing compounds used for this embodiment is preferably 200 mgKOH/g or less, more preferably 100 mgKOH/g or less, still more preferably 50 mgKOH/g or less, further preferably 30 mgKOH/g or less, furthermore preferably 15 mgKOH/g or less, and even furthermore preferably 10 mgKOH/g or less. The lower limit value of the acid value is usually 0 mgKOH/g or more. By setting the acid value to be equal to or less than 200 mgKOH/g, the resulting molded body tends to have more improved impact resistance. In the case where the resin composition of this embodiment contains two or more types of hydroxy group-containing compounds, the acid value is an acid value of the mixture of the hydroxy group-containing compounds. The acid value is measured according to JIS K0070-1992.

The weight average molecular weight of the hydroxy group-containing compound for use in this embodiment is preferably 1,500 or more, more preferably 2,000 or more, and preferably 30,000 or less, more preferably 25,000 or less, still more preferably 20,000 or less, further preferably 18,000 or less, furthermore preferably 16,000 or less. By setting the weight average molecular weight to be equal to or more than 1,500, the separation on the surface of a molded body is suppressed, so that the deterioration of appearance of the molded body and contamination of the mold can be effectively suppressed. Also, by setting the weight average molecular weight to be equal to or less than 30,000, the hydroxy group-containing compound is hardly retained in the resin, so that adhesion of the water-based coating material can be further improved. In other word, by using the hydroxy group-containing compound in a preferred range, the hydroxy group-containing compound moderately floats on the molded body surface, so that the adhesion of the water-based coating material can be effectively improved at the time of coating.

In this embodiment, it is preferable that the hydroxy group-containing compound be a blended product of one having a weight average molecular weight of 1,500 to 5,000 (preferably 2,000 or more and preferably 4,000 or less, more preferably 3,000 or less) and one having a weight average molecular weight of 10,000 to 30,000 (preferably 11,000 or more, more preferably 12,000 or more, still more preferably 13,000 or more, and preferably 27,000 or less, more preferably 24,000 or less, still more preferably 21,000 or less, further preferably 18,000 or less, furthermore preferably 16,000 or less). With such a constitution, the effect of the present invention tends to be more effectively exhibited. In particular, in the resin composition of this embodiment, it is more preferable that the mass ratio between the hydroxy group-containing compound having a weight average molecular weight of 1,500 to 5,000 and the hydroxy group-containing compound having a weight average molecular weight of 10,000 t0 30,000 be 1:1 to 1:3.

In this embodiment, the ratio between the weight average molecular weight of the polybutylene terephthalate resin and the weight average molecular weight of the hydroxy group-containing compound (Weight average molecular weight of polybutylene terephthalate resin/Weight average molecular weight of hydroxy group-containing compound) is preferably 40/1 to 5/1, more preferably 40/1 to 8/1. By setting the ratio to be equal to or more than the lower limit, the delamination phenomenon near a gate is suppressed, so that the appearance tends to be further excellent. By setting the ratio to be equal to or less than the upper limit, the fluidity at the time of forming tends to be further excellent.

The content of the hydroxy group-containing compound used in this embodiment relative to 100 parts by mass of the resin components including the polybutylene terephthalate resin is 3 parts by mass or more, preferably 4 parts by mass or more, more preferably 5 parts by mass or more, and may be 6 parts by mass or more, 7 parts by mass or more, 8 parts by mass or more, or 10 parts by mass or more, depending on the use or the like. The content of the hydroxy group-containing compound used in this embodiment relative to 100 parts by mass of the resin components including the polybutylene terephthalate resin is 20 parts by mass or less, preferably 18 parts by mass or less, and further, depending on the use or the like, the content may be 16 parts by mass or less, 14 parts by mass or less, 12 parts by mass or less, 10 parts by mass or less, 9 parts by mass or less, or 8 parts by mass or less. By setting the content of the hydroxy group-containing compound in the range, the adhesion of the water-based coating material may be further improved without lowering the impact resistance.

The resin composition of this embodiment may include only one type of the hydroxy group-containing compound, or may include two or more types. In the case of including two or more types, it is preferable that the total amount be in the range described above.

<<Conductive carbon>>

The resin composition of this embodiment contains a conductive carbon. By including a conductive carbon, the molded body has a lowered resistivity, so that electrostatic coating can be applicable.

Examples of the conductive carbon include carbon black (for example, Ketjen black, furnace black, channel black and acetylene black), graphene, graphite, fullerene, carbon nanocoil, carbon nanotube and carbon fiber. Carbon black is preferred and Ketjen black is more preferred.

The number average primary particle size of the conductive carbon used in this embodiment may be appropriately selected and determined. In particular, the average particle size is preferably 5 nm or more, more preferably 7 nm or more, and still more preferably 10 nm or more. Also, the average particle size is preferably 60 nm or less, more preferably 55 nm or less, and still more preferably 50 nm or less. By setting the number average primary particle size in the range, agglomeration of conductive carbon is suppressed, so that the appearance tends to be improved. The number average primary particle size of the conductive carbon may be determined by using a transmission electron microscope. In the case where the conductive carbon includes no particle, the average primary particle size in terms of a particle having the same volume is employed.

The conductive carbon used in this embodiment has a DBP absorption amount of preferably 300 $cm^3/100$ g or more. Although the upper limit is not particularly limited, an amount equal to or less than 1000 $cm^3/100$ g is preferred. By setting the DBP absorption amount to be equal to or more than 300 $cm^3/100$ g, good conductivity can be imparted to the resin composition with less amount of addition. Incidentally, the DBP absorption amount may be measured according to JIS K6217 (unit: $cm^3/100$ g).

The nitrogen adsorption specific surface area of the conductive carbon used in this embodiment is preferably 600 $m^2/g$ or more, and in particular, preferably 800 $m^2/g$ or more. The upper limit is not particularly limited, and from handleability, preferably 1500 $m^2/g$ or less, more preferably 1300 $m^2/g$ or less. By setting the nitrogen adsorption specific surface area to be equal to or more than 600 $m^2/g$, the conductivity can be imparted to the molded body while suppressing lowering of mechanical properties. Incidentally, the nitrogen adsorption specific surface area may be measured according to JIS K6217 (unit: $m^2/g$).

The pH of the conductive carbon used in this embodiment is also not particularly limited, is usually 2 or more, preferably 3 or more, and more preferably 4 or more. The pH is 10 or less, preferably 9 or less, and more preferably 8 or less.

The content of the conductive carbon used in this embodiment relative to 100 parts by mass of resin components containing the polybutylene terephthalate resin is 3 parts by mass or more, more preferably 4 parts by mass or more, still more preferably 5 parts by mass or more, and may be 6 parts by mass or more, 7 parts by mass or more, 8 parts by mass or more, or 10 parts by mass or more depending on the use or the like. Also, the content of the conductive carbon relative to 100 parts by mass of resin components containing the polybutylene terephthalate resin is 20 parts by mass or less, more preferably 19 parts by mass or less, still more preferably 18 parts by mass or less, and further, may be 17 parts by mass or less, 16 parts by mass or less, 14 parts by mass or less, 12 parts by mass or less, 10 parts by mass or less, 9 parts by mass or less, or 8 parts by mass or less depending on the use or the like. By setting the content of the conductive carbon in the range, the conductivity can be imparted to the molded body while maintaining the mechanical properties.

The resin composition of this embodiment may contain only one type of conductive carbon, or may contain two or more types. In the case of containing two or more types, it is preferable that the total amount be in the range described above.

<<Stabilizer>>

The resin composition of this embodiment may contain a stabilizer such as antioxidant.

By using a stabilizer, decomposition resulting from a transesterification reaction of the polybutylene terephthalate resin and the polycarbonate resin can be suppressed, so that the physical properties and appearance are improved. Examples of the stabilizer include a phenol-based stabilizer, an amine-based stabilizer, a phosphorus-based stabilizer, a thioether-based stabilizer. In this embodiment, a phosphorus-based stabilizer and/or a phenol-based stabilizer are preferred, and it is more preferable to contain both a phosphorus-based stabilizer and a phenol-based stabilizer.

In particular, it is preferable that a phosphorus-based stabilizer be compounded in the case of using a polycarbonate resin.

As the phosphorus-based stabilizer, any known one may be used. Specific examples thereof include oxo acids of phosphorus such as phosphoric acid, phosphonic acid, phosphorous acid, phosphinic acid and polyphosphoric acid; metal salts of acidic pyrophosphoric acid such as acidic sodium pyrophosphate, acidic potassium pyrophosphate and acidic calcium pyrophosphate; phosphates of group 1 or group 2B metal such as potassium phosphate, sodium phosphate, cesium phosphate and zinc phosphate; organic phosphate compounds, organic phosphite compounds and organic phosphonite compound, and in particular, organic phosphate compounds are preferred.

As phenol-based stabilizers, hindered phenol-based stabilizers are preferably used. Specific examples of the hindered phenol-based stabilizers include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octyl thiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazine-2-ylamino)phenol, and 2-[1-(2-hydroxy-3,5-di-tert-pentylphenyl)ethyl]-4,6-di-tert-pentylphenyl acrylate.

In particular, pentaerythritol tetrakis[3-(3,5-di-tert-butyl-4-hydroxyphenyl)propionate] and octadecyl-3-(3,5-di-tert-butyl-4-hydroxyphenyl)propionate are preferred. Specific examples of such hindered phenol-based stabilizers include "Irganox (registered trademark, the same hereinafter) 1010" and "Irganox 1076" manufactured by BASF, and "Adeka Stab AO-50" and "Adeka Stab AO-60" manufactured by ADEKA Corporation.

In the case of containing a stabilizer, the content thereof is preferably in the range of 0.01 to 5 mass% of the resin composition.

In particular, in the case where the resin composition of this embodiment contains a phosphorus-based stabilizer, the content thereof relative to 100 parts by mass of the resin components is preferably 0.05 parts by mass or more, more preferably 0.06 parts by mass or more, still more preferably 0.08 parts by mass or more, further preferably 0.10 parts by mass or more, and preferably 2 parts by mass or less, more preferably 1.5 parts by mass or less, still more preferably 1.0 parts by mass or less, further preferably 0.7 parts by mass or less, furthermore preferably 0.5 parts by mass or less, still furthermore preferably 0.3 parts by mass or less, even still more preferably 0.2 parts by mass or less, and particularly further preferably 0.15 parts by mass or less.

In particular, in the case where the resin composition of this embodiment contains a phenol-based stabilizer, the content thereof relative to 100 parts by mass of the resin components is preferably 0.1 parts by mass or more, more preferably 0.2 parts by mass or more, still more preferably 0.25 parts by mass or more, further preferably 0.3 parts by mass or more, and preferably 2 parts by mass or less, more preferably 1.5 parts by mass or less, still more preferably 1.0 parts by mass or less, further preferably 0.7 parts by mass or less, furthermore preferably 0.5 parts by mass or less.

In addition, in the case of using a phosphorus-based stabilizer and a phenol-based stabilizer in a combination, the mass ratio Phosphorus-base/Phenol-base is preferably 1/0.5 to 5.

The resin composition of this embodiment may contain only one type of stabilizer, or may contain two or more types. In the case of containing two or more types, it is preferable that the total amount be in the range described above.

<<Other additives>>

The resin composition of this embodiment may contain a resin additives other than the ones described above. Specifically, a mold release agent (polyethylene wax, oxidized polyethylene wax, silicone oil, fluorine-based resin, fatty acid, fatty acid ester, metal salt of fatty acid, etc.), a flame retardant ( phosphorus-based flame retardant, halogen-based flame retardant, organic metal-based flame retardant, etc.), an internal lubricant (metal salt of fatty acid, polyethylene wax, etc.), a reinforcement material (carbon fiber, glass fiber, talc, mica, etc.), a dye, a weather resistance improver, a nucleating agent, a plasticizer, a fluidity improver, etc. may be contained.

In the case of containing other components, the content thereof in total is preferably in the range of 0.01 to 10 mass% of the resin composition.

The resin composition of this embodiment is subjected to adjustment such that the total content of the polybutylene terephthalate resin, polycarbonate resin, elastomer, hydroxy group-containing compound, conductive carbon, and the other components selectively blended are 100 mass%.

The resin composition of this embodiment is subjected to adjustment such that the total content of the polybutylene terephthalate resin, polycarbonate resin, elastomer, hydroxy group-containing compound, conductive carbon, and the other components selectively blended are 100 mass%. Also, the total content of the polybutylene terephthalate resin, polycarbonate resin, elastomer, hydroxy group-containing compound and conductive carbon preferably accounts for 90 mass% or more of the resin composition, more preferably 94 mass% or more, and still more preferably 96 mass% or more. Furthermore, the total content of the polybutylene terephthalate resin, polycarbonate resin, elastomer, hydroxy group-containing compound, conductive carbon, stabilizer and mold release agent preferably accounts for 95 mass% or more of the resin composition, more preferably 97 mass% or more, and still more preferably 99 mass% or more.

<Production method of resin composition>

The production method of the resin composition of this embodiment is not limited to a specific method, and examples thereof include a method of mixing each of the polybutylene terephthalate resin, polycarbonate resin, elastomer, hydroxy group-containing compound, conductive carbon, etc., and then melt-kneading the mixture. The melt-kneading method may be a conventional method usually used for a thermoplastic resin.

Examples of the melt-kneading method include a method including uniformly mixing the essential components described above and other components blended on an as needed basis with a Henschel mixer, a ribbon blender, a V-type blender, a tumbler mixer, or the like, and melt-kneading the mixture with a single-screw or multi-screw kneading extruder, a roll, a Banbury mixer, a Labo Plastomill (Brabender), etc. In the case of adding a reinforcement material, it is preferable to supply the reinforcement material from a side feeder of the kneading extruder, so that the reinforcement material can be dispersed with suppressed breakage. In the melt-kneading, the temperature and kneading time may be selected depending on the type of constituents of the resin components, the constituent ratio, the type of melt-kneader, etc., and the temperature during melt-kneading is preferably in the range of 200 to 300°C. By setting the temperature to be equal to or less than 300°C, thermal deterioration of each component hardly occurs, so that the physical properties and appearance of the resulting molded body tend to improve.

<Volume specific resistivity>

A 3-mm thick test specimen molded from the resin composition of this embodiment has a volume specific resistivity measured according to IEC60093 of preferably $1.0 \times 10^{14}$ $\Omega \cdot$cm or less, more preferably less than $1.0 \times 10^{12}$ $\Omega \cdot$cm. The lower limit is not particularly limited, and practically $1.0 \times 10^{10}$ $\Omega \cdot$cm or more. By setting the volume specific resistivity of the resin composition in the range, the electrostatic coating may be performed more easily.

<Production method of molded body>

The resin composition of this embodiment is formed from the resin composition of this embodiment.

The production method of the molded body in this embodiment is not particularly limited, and any molding method commonly used for resin compositions can be adopted. Examples thereof include injection molding, ultra-high-speed injection molding, injection compression molding, two-color molding, gas-assisted blow molding, molding using a heat-insulated mold, molding using a rapid heating mold, foam molding (including supercritical fluid), insert molding, IMC (in-mold coating molding) molding, extrusion molding, sheet molding, thermoforming, rotational molding, lamination molding, press molding, blow molding, and the like. Alternatively, a molding method using a hot runner method may be used.

<Uses>

The resin composition and the molded body of this embodiment are suitable for a wide variety of uses such as interior and exterior parts of vehicles and airplanes, electrical/electronic/OA devices or components, mobile phones, mechanical components, construction materials, and leisure goods/miscellaneous goods.

Specifically, examples of the exterior parts of automobiles include outer handles, door mirror stay, fenders, garnishes, bumpers, roof rails and wiper arms, and examples of the interior parts of automobiles include inner handles, center consoles, indoor panels, assist grips and seat belt stoppers.

Examples of the railway vehicle components include table arms, straps and assist grips and examples of the electrical component include shaver frames, dryer, handles and grips for a refrigerator, doors for a microwave oven, handles for a portable MD system, headphone arms, and housings for an electric screwdriver. Examples of the building components include door handles, crescents and flush bolts.

The resin composition of this embodiment is used to form a molded body to be applied with a water-based coating material, allowing electrostatic coating using the water-based coating material. The resin composition and the molded body of this embodiment are preferably used for automobile exterior components such as fuel oil tank lid part, in particular. Examples of the water-based coating material include water-based urethane coating material and water-based acrylic coating material, and water-based urethane coating material is particularly suitable. The reason is presumed that the residual isocyanate as raw material of urethane for the water-based urethane coating material reacts with the hydroxy groups of the hydroxy group-containing compound to further improve the adhesion. In other words, this embodiment can provide a molded body having a coating material layer, which includes the molded body of this embodiment with a surface coated (preferably electrostatically coated) with a water-based coating material.

Further, a kit of the resin composition of this embodiment and a water-based urethane coating material is preferably used. The kit is preferably used as a kit for fuel oil tank lid, in particular.

[Examples]

The present invention will now be explained in more detail with reference to the following examples. The materials, usage amounts, proportions, processing details, processing procedures, and the like described in the following examples can be changed as appropriate without departing from the subject matter of the present invention. Therefore, the scope of the present invention is not limited to the specific examples shown below.

If the measuring equipment and the like used in the examples is difficult to obtain due to discontinuation, for example, the measurements can be performed using other equipment with an equivalent performance.

<Raw materials for use>

[Table 1]

| Component | Symbol | |
|---|---|---|
| Polybutylene terephthalate | A-1 | Polybutylene terephthalate resin<br>IV=1.20 dL/g, Weight average molecular weight = 90000 |
| | A-2 | Polybutylene terephthalate resin<br>IV=1.26 dL/g, Weight average molecular weight = 95500 |
| Polycarbonate | B-1 | Polycarbonate resin<br>"Lupilon 7030PJ", manufactured by Mitsubishi Engineering-Plastics Corporation |
| Elastomer | C-1 | Ethylene-butyl acrylate-glycidyl methacrylate copolymer<br>"LOTADER AX8700", manufactured by Arkema S.A. Glycidyl methacrylate content = 9 mass% |
| | C-2 | Butadiene-based core-shell rubber<br>"EXL 2678", manufactured by DowDuPont Inc. |

[Table 2]

| Component | Symbol | |
|---|---|---|
| Hydroxy group-containing compound | D-1 | Hydroxy group-containing acrylic polymer "ARFON UH-2041" manufactured by TOAGOSEI Co., Ltd. Hydroxy group content = 2.3% Weight average molecular weight = 2500, acid value = 5 mg ·KOH/g or less, amorphous |
| | D-2 | Hydroxy group-containing acrylic polymer "ARFON UH-2170" manufactured by TOAGOSEI Co., Ltd. Concentration of hydroxy group = 1.4% Weight average molecular weight = 14000, acid value = 5 mg·KOH/g or less, amorphous |
| | D-X | Hydroxy group-containing ethylene-based copolymer (ethylene-vinyl alcohol copolymer) "EVAL L171B" manufactured by Kuraray Co., Ltd. Concentration of hydroxy group = 17.5% |
| Conductive carbon | E-1 | Ketjen black "EC-300", manufactured by Lion Specialty Chemicals Co., Ltd. |
| Phenol-based stabilizer | F-1 | Hindered phenol-based antioxidant "AO-60", manufactured by ADEKA Corporation |
| Phosphorus-based stabilizer | F-2 | Octadecyl acid phosphate "AX-71", manufactured by ADEKA Corporation |
| | F-3 | Zinc stearyl acid phosphate "JP-518Zn", manufactured by Johoku Chemical Co., Ltd. |
| Mold release agent | G-1 | Oxidized polyethylene wax "PED 522" manufactured by Clariant AG |

<Measurement of concentration of hydroxy group in hydroxy group-containing compound>

In 0.5 mL of dimethyl sulfoxide-d6, 14.2 g of the hydroxy group-containing compound was dissolved. The concentration of hydroxy group was determined from the following formula that represents the proportion of the peak area derived from hydroxy group relative to the whole peak area in analysis using $^1$H NMR (AVANCE III) manufactured by Bruker.

Concentration of hydroxy group (%) = [(Peak area derived from hydroxy group (Integrated value of proton of hydroxy group)/Whole peak area (Integrated value of whole protons)) $\times$ 100]

In the case of using a plurality of hydroxy group-containing compounds, the concentration of hydroxy group is represented by the sum total of products of a ratio of each amount of hydroxy group-containing compound to total amount of hydroxy group-containing compounds and each concentration of hydroxy group-containing compound.

Example: In the case of using hydroxy group-containing compound A and hydroxy group-containing compound B

Concentration of hydroxy group (%) = Concentration of hydroxy group of hydroxy group-containing compound A (%)/(Parts by mass of hydroxy group-containing compound A/Parts by mass of whole hydroxy group-containing compounds) + concentration of hydroxy group of hydroxy group-containing compound B (%)/(Parts by mass of hydroxy group-containing compound B/Parts by mass of whole hydroxy group-containing compounds)

Examples 1 to 4 and Comparative Examples 1 to 6

<Compound>

Each of the components was weighed to make the composition shown in the following table (each component in parts by mass) and uniformly mixed using a tumbler mixer. The obtained mixture was then fed into a twin-screw extruder ("TEX30α" manufactured by Japan Steel Works, Ltd., L/D = 42), and kneaded under conditions at a screw rotation speed of 200 rpm, a discharge amount of 30 kg/hour, and a barrel temperature of 250°C. The molten resin extruded in a strand shape was rapidly cooled in a water tank and pelletized using a pelletizer to obtain pellets of the resin composition.

<Tensile breakage strength (MPa) and Tensile elongation at break (%)>

The pellets obtained by the production method described above were dried at 120°C for 6 hours, and then an ISO 3167:93 A type test specimen (hereinafter referred to as "ISO test specimen") was injection molded using an injection molding machine manufactured by Nippon Steel Corporation (mold clamping force: 85 T) under conditions of a cylinder temperature of 250°C and a mold temperature of 80°C.
The tensile breakage strength (unit: MPa) and the tensile elongation at break (%) were measured in accordance with ISO 527 using the above ISO test specimen.

<Maximum bending strength (MPa) and bending elastic modulus (MPa)>

The maximum bending strength (unit: MPa) and bending elastic modulus (unit: MPa) were measured in accordance with ISO 178 using an 80 mm × 10 mm × 4 mm-thick test specimen in a strip shape made by machining the parallel part of the above ISO test specimen, under conditions at a temperature of 23°C and a humidity of 50%.

<Notched Charpy impact strength (unit: $kJ/m^2$)>

By cutting the ISO test specimen thus obtained to cut off the grip parts at both ends and notch the central part, the notched Charpy impact test specimen was formed in accordance with ISO-179-1 and ISO 179-2. The notched Charpy impact strength (unit: $kJ/m^2$) of the resulting notched Charpy impact test specimen was measured in accordance with ISO-179-1 and ISO 179-2 at a temperature of 23°C for evaluation of the impact resistance.

<Evaluation of strength>

A: All of a tensile breakage strength of 50 MPa or more, a maximum bending strength of 75 MPa or more, and a notched Charpy impact strength of 12 $kJ/m^2$ are satisfied.
B: Although condition A is not satisfied, all of a tensile breakage strength of 45 MPa or more, a maximum bending strength of 70 MPa or more, and a notched Charpy impact strength of 10 $kJ/m^2$ or more are satisfied.
C: Conditions A and B are not satisfied.

<Temperature of deflection under load (°C)>

Using a test specimen in a strip shape with sizes of 80 mm × 10 mm × 4 mm-thick made by machining the parallel part of the ISO test specimen in accordance with ISO-75-1, the temperature of deflection under load (unit: °C) was measured under a load of 1.80 MPa.

<Volume specific resistivity>

The pellets obtained by the production method described above were dried at 120°C for 6 hours, and then a flat plate specimen with sizes of 100 mm × 100 mm × 3 mm was injection molded using an injection molding machine ("NEX 80" manufactured by Nissei Plastic Industrial Co., Ltd.) at a cylinder temperature of 260°C and a mold temperature of 80°C.
The test specimen obtained by the molding method was subjected to measurement of volume specific resistivity in accordance with IEC 60093. The unit of the volume specific resistivity is in Ω·cm.
The resistivity meter of the volume specific resistivity for use was product number R8340A manufactured by Advantest Corporation.

<Evaluation of conductivity>

A: The volume specific resistivity is less than $1.0 \times 10^{12}$ Ω·cm.
B: The volume specific resistivity is $1.0 \times 10^{12}$ Ω·cm or more and $1.0 \times 10^{14}$ Ω·cm or less.

C: The volume specific resistivity is more than $1.0 \times 10^{14}$ Ω·cm.

<Coating properties>

The surface of a test specimen having sizes of 100 mm × 100 mm × 2 mm-thick was wiped with isopropyl alcohol for degreasing, and then coated with a commonly used coating material for automobile body (manufactured by BASF), which was baked at 140°C for 20 minutes. After baking, a peeling test with 100 cross-cut squares was performed in accordance with JIS K5600. Eleven cuts were made on the coated surface crosswise in both length and width directions at 2 mm spacing with a cutter knife. A transparent adhesive tape was attached thereon and the tape was rubbed with fingers to make close contact. Then within 5 minutes, the transparent adhesive tape was peeled off upward all at once. The operation was performed in both length and width directions 3 times in total, and then the number of squares with the coating material remaining on the coating surface was recorded.

<Evaluation of coating>

A: In the test of coating properties, no square is peeled off.
B: In the test of coating properties, the number of squares with coating material remaining is 85 or more.
C: In the test of coating properties, the number of squares with coating material remaining is less than 85.

[Table 3]

| | Symbol | Example 1 | Example 2 | Example 3 | Example 4 |
|---|---|---|---|---|---|
| Polybutylene terephthalate | A-1 | 1.06 | 1.06 | 1.06 | 4.61 |
| | A-2 | 52.60 | 52.60 | 52.60 | 50.72 |
| Polycarbonate | B-1 | 46.34 | 46.34 | 46.34 | 44.68 |
| Elastomer | C-1 | 7.43 | 7.43 | 7.43 | 7.16 |
| | C-2 | | | | |
| Hydroxy group-containing compound | D-1 | 2.48 | 2.48 | | 2.39 |
| | D-2 | 3.71 | 3.71 | 6.19 | |
| | D-X | | | | 5.97 |
| Concentration of hydroxy group of hydroxy group-containing compound | | 1.80 | 1.80 | 2.30 | 13.20 |
| Conductive carbon | E-1 | 9.28 | 9.28 | 9.28 | 8.95 |
| Phenol-based stabilizer | F-1 | 0.37 | 0.37 | 0.37 | 0.36 |
| Phosphorus-based stabilizer | F-2 | | 0.12 | | |
| | F-3 | 0.12 | | 0.12 | 0.12 |
| Mold release agent | G-1 | 0.37 | 0.37 | 0.37 | 0.36 |
| Tensile breakage strength [MPa] | | 53 | 52 | 56 | 57 |
| Tensile elongation at break [%] | | 14 | 15 | 10 | 11 |
| Maximum bending strength [MPa] | | 84 | 85 | 87 | 87 |
| Bending elastic modulus [MPa] | | 2396 | 2433 | 2433 | 2520 |
| Notched Charpy impact strength [kJ/m$^2$] | | 15.6 | 16.1 | 31.0 | 11.5 |
| Evaluation of strength | | A | A | A | B |
| Temperature of deflection under load [°C] | | 104 | 113 | 111 | 113 |
| Volume specific resistivity | | <E+12 | <E+12 | <E+12 | <E+12 |

(continued)

|  | | Example | | | |
|---|---|---|---|---|---|
|  | Symbol | 1 | 2 | 3 | 4 |
| Evaluation of conductivity | | A | A | A | A |
| Coating property | | 100 | 100 | 97 | 86 |
| Evaluation of coating property | | A | A | B | B |

[Table 4]

|  |  | Comparative Example | | | | | |
|---|---|---|---|---|---|---|---|
|  | Symbol | 1 | 2 | 3 | 4 | 5 | 6 |
| Polybutylene terephthalate | A-1 | 6.83 | 4.61 | 6.83 | 6.83 | 4.61 | 50.43 |
|  | A-2 | 49.53 | 50.72 | 49.53 | 49.53 | 50.72 | 15.95 |
| Polycarbonate | B-1 | 43.64 | 44.68 | 43.64 | 43.64 | 44.68 | 33.62 |
| Elastomer | C-1 | 6.99 | 7.16 | 6.99 | 6.99 |  | 9.38 |
|  | C-2 |  |  |  |  | 7.16 |  |
| Hydroxy group-containing compound | D-1 |  |  |  |  |  |  |
|  | D-2 |  | 2.39 |  |  | 2.39 |  |
|  | D-X |  |  | 2.33 | 11.66 |  |  |
| Conductive carbon | E-1 | 8.74 | 8.95 | 8.74 | 8.74 | 8.95 | 2.81 |
| Phenol-based stabilizer | F-1 | 0.35 | 0.36 | 0.35 | 0.35 | 0.36 | 0.28 |
| Phosphorus-based stabilizer | F-2 |  |  |  |  |  |  |
|  | F-3 | 0.12 | 0.12 | 0.12 | 0.12 | 0.12 | 0.09 |
| Mold release agent | G-1 | 0.35 | 0.36 | 0.35 | 0.35 | 0.36 | 0.28 |
| Tensile breakage strength [MPa] | | 55 | 56 | 56 | 59 | 63 | 52 |
| Tensile elongation at break [%] | | 17 | 12 | 11 | 9 | 12 | 47 |
| Maximum bending strength [MPa] | | 86 | 87 | 85 | 89 | 96 | 77 |
| Bending elastic modulus [MPa] | | 2359 | 2391 | 2405 | 2594 | 2681 | 2202 |
| Notched Charpy impact strength [kJ/m$^2$] | | 40.0 | 34.0 | 38.9 | 10.6 | 6.4 | 56.7 |
| Evaluation of strength | | A | A | A | B | C | A |
| Temperature of deflection under load [°C] | | 121 | 117 | 121 | 109 | 121 | 115 |
| Volume specific resistivity | | <E+12 | <E+12 | <E+12 | <E+12 | <E+12 | >E+14 |
| Evaluation of conductivity | | A | A | A | A | A | C |
| Coating property | | 9 | 54 | 47 | 65 | 16 | - |
| Evaluation of coating property | | C | C | C | C | C | C |

As clearly shown in the results, the resin composition of this embodiment is excellent in coating adhesion of a water-based coating material. Further, it has been found that the resin composition is suitably used in application such as a fuel tank lid that requires electrostatic coating, due to having a low volume specific resistivity. Furthermore, the molded body obtained from the resin composition of this embodiment is excellent in various mechanical strength and heat resistance.

**Claims**

1. A resin composition comprising:

   2 to 15 parts by mass of an elastomer, 3 to 20 parts by mass of a hydroxy group-containing compound, and 3 to 20 parts by mass of conductive carbon, relative to 100 parts by mass of resin components including polybutylene terephthalate resin,
   wherein the hydroxy group-containing compound has a concentration of hydroxy group as proportion of the peak area derived from hydroxy group relative to the whole peak area in $^1$H NMR analysis [(Peak area derived from hydroxy group/Whole peak area) $\times$ 100] in the range of 0.5 to 15.0%.

2. The resin composition according to claim 1, wherein the resin components further comprise a polycarbonate resin.

3. The resin composition according to claim 2, further comprising 0.05 to 2 parts by mass of a phosphorus-based stabilizer relative to 100 parts by mass of the resin components.

4. The resin composition according to any one of claims 1 to 3, wherein the polybutylene terephthalate resin has an limiting viscosity of 1.00 to 1.50 dL/g.

5. The resin composition according to any one of claims 1 to 4, wherein the elastomer comprises an epoxy group-containing compound.

6. The resin composition according to any one of claims 1 to 5, wherein the hydroxy group-containing compound has a weight average molecular weight of 1,500 to 30,000.

7. The resin composition according to any one of claims 1 to 6, wherein the hydroxy group-containing compound comprises a (meth)acrylic compound.

8. The resin composition according to any one of claims 1 to 7, wherein the hydroxy group-containing compound is an amorphous compound.

9. The resin composition according to any one of claims 1 to 8, wherein the concentration of hydroxy group of the hydroxy group-containing compound is in the range of 0.5 to 10.0%.

10. The resin composition according to any one of claims 1 to 9, being used for forming a molded body to be electrostatically coated with a water-based coating material.

11. A molded body formed from a resin composition according to any one of claims 1 to 10.

12. The molded body according to claim 11, being a fuel oil tank lid.

## INTERNATIONAL SEARCH REPORT

| International application No. |
|---|
| **PCT/JP2023/026744** |

| A. | CLASSIFICATION OF SUBJECT MATTER |
|---|---|

*C08L 67/02*(2006.01)i; *C08K 3/04*(2006.01)i; *C08K 5/49*(2006.01)i; *C08L 23/08*(2006.01)i; *C08L 51/04*(2006.01)i; *C08L 69/00*(2006.01)i; *C08L 101/02*(2006.01)i
FI:   C08L67/02; C08K3/04; C08K5/49; C08L23/08; C08L51/04; C08L69/00; C08L101/02

According to International Patent Classification (IPC) or to both national classification and IPC

| B. | FIELDS SEARCHED |
|---|---|

Minimum documentation searched (classification system followed by classification symbols)

C08L67/02; C08K3/04; C08K5/49; C08L23/08; C08L51/04; C08L69/00; C08L101/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/054705 A1 (MITSUBISHI ENGINEERING PLASTICS CORP.) 19 March 2020 (2020-03-19)<br>entire text | 1-12 |
| A | JP 2020-84133 A (TORAY INDUSTRIES, INC.) 04 June 2020 (2020-06-04)<br>entire text | 1-12 |
| A | JP 2018-159003 A (TEIJIN LTD.) 11 October 2018 (2018-10-11)<br>entire text | 1-12 |
| A | JP 7-258557 A (NOF CORP.) 09 October 1995 (1995-10-09)<br>entire text | 1-12 |
| A | JP 2014-218551 A (NOF CORP.) 20 November 2014 (2014-11-20)<br>entire text | 1-12 |
| A | JP 2006-213766 A (MITSUBISHI CHEMICAL CORP.) 17 August 2006 (2006-08-17)<br>entire text | 1-12 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/026744**

### C. DOCUMENTS CONSIDERED TO BE RELEVANT

| Category* | Citation of document, with indication, where appropriate, of the relevant passages | Relevant to claim No. |
|---|---|---|
| A | JP 7-207135 A (MITSUBISHI CHEMICAL CORP.) 08 August 1995 (1995-08-08) entire text | 1-12 |
| A | JP 1-146949 A (SHOWA DENKO K.K.) 08 June 1989 (1989-06-08) entire text | 1-12 |
| A | WO 2020/230394 A1 (BRIDGESTONE CORP.) 19 November 2020 (2020-11-19) entire text | 1-12 |

Form PCT/ISA/210 (second sheet) (January 2015)

**INTERNATIONAL SEARCH REPORT**
Information on patent family members

International application No.

**PCT/JP2023/026744**

| Patent document cited in search report | | | Publication date (day/month/year) | Patent family member(s) | | | Publication date (day/month/year) |
|---|---|---|---|---|---|---|---|
| WO | 2020/054705 | A1 | 19 March 2020 | US entire text | 2021/0340346 | A1 | |
| | | | | EP | 3851553 | A1 | |
| | | | | CN | 112654728 | A | |
| JP | 2020-84133 | A | 04 June 2020 | (Family: none) | | | |
| JP | 2018-159003 | A | 11 October 2018 | (Family: none) | | | |
| JP | 7-258557 | A | 09 October 1995 | (Family: none) | | | |
| JP | 2014-218551 | A | 20 November 2014 | (Family: none) | | | |
| JP | 2006-213766 | A | 17 August 2006 | (Family: none) | | | |
| JP | 7-207135 | A | 08 August 1995 | (Family: none) | | | |
| JP | 1-146949 | A | 08 June 1989 | (Family: none) | | | |
| WO | 2020/230394 | A1 | 19 November 2020 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019037122 A
- WO 2008075776 A
- JP 2019006866 A
- JP 2019059813 A